# EUROPÄISCHE PATENTSCHRIFT

(11) **EP 3 455 048 B1**
(45) Veröffentlichungstag und Bekanntmachung des Hinweises auf die Patenterteilung: **04.10.2023**
(21) Anmeldenummer: 17722745.1
(22) Anmeldetag: 09.05.2017
(51) Int. Cl.: B29C 48/10, B29C 48/88, B29C 48/92, B29C 48/49

(54) **BLASFOLIENANLAGE ZUR HERSTELLUNG EINER BLASFOLIE**
BLOWN-FILM SYSTEM FOR PRODUCING A BLOWN FILM
DISPOSITIF DE FABRICATION D'UNE FEUILLE SOUFFLÉE

(30) Priorität: 09.05.2016 DE 102016207951; 10.05.2016 DE 102016208031
(43) Veröffentlichungstag der Anmeldung: 20.03.2019
(73) Patentinhaber: Windmöller & Hölscher KG, 49525 Lengerich (DE)
(72) Erfinder: BACKMANN, Martin, 49525 Lengerich (DE); BUSSMANN, Markus, 49525 Lengerich (DE); GOLDENSTEIN, Jens, 49525 Lengerich (DE)
(86) Internationale Anmeldenummer: PCT/EP2017/061024
(87) Internationale Veröffentlichungsnummer: WO 2017/194520

(56) Entgegenhaltungen:
- EP-A1- 1 736 297
- EP-A1- 2 801 467
- JP-A- S5 894 433
- JP-A- H09 123 273
- JP-A- S58 107 315
- JP-A- 2002 067 146
- JP-A- 2010 247 453
- US-A- 4 118 453
- US-A- 4 473 527
- US-A- 4 728 277
- US-A- 5 804 221

## Beschreibung

Die Erfindung betrifft eine Blasfolienanlage nach dem Oberbegriff des Anspruchs 1.

Eine eingangs erwähnte Blasfolienanlage wird zur effizienten Produktion einer Folie verwendet, wobei die Blasfolienanlage eine Blasfolie produziert. In der Blasfolienanlage ist zunächst wenigstens ein Extruder vorgesehen, mit welchem - vorzugsweise aus einem Rohmaterial - zumindest ein Schmelzestrang erzeugt wird. Es schließt sich zumindest ein Verteilwerkzeug an zum Umwandeln des zumindest einen Schmelzestrangs in eine umlaufende Schmelzeschicht. Diese Schmelzeschicht gelangt anschließend zu einer Austrittsdüse, die in der Regel kreisförmig ist, mit welcher die zumindest eine Schmelzeschicht ausgebbar ist. Nach dem Austritt aus der Austrittsdüse bildet die Schmelzeschicht die Blasfolie. Diese Blasfolie erkaltet nun sukzessive, da sie nun Wärme an die Umgebung abgeben kann. Erst nach einer gewissen Auskühlzeit hat sich die Blasfolie so weit verfestigt, dass im Wesentlichen ihr Format, insbesondere den Blasenumfang und die Wandstärke, beibehält. Diesen Übergang nennt man Frostlinie oder Frostbereich. Eine Blasfolie, die diesen Frostbereich überschritten hat, kann flachgelegt und abgezogen werden.

Die Produktionsgeschwindigkeit bei der Herstellung einer Blasfolie hängt wesentlich davon ab, wie schnell die Blasfolie auskühlt. Um das Auskühlen zu beschleunigen, ist es bekannt, eine Einrichtung zum Beaufschlagen der Blasfolie mit wenigstens einem Fluidstrom, insbesondere mit einem Luftstrom, vorzusehen, um zusätzlich Wärme abzutransportieren bzw. um die Blasfolie zu kühlen.

Die US 4 473 527 zeigt eine Blasfolienanlage mit Außenkühlringen, die durch die Beaufschlagung mit Luftströmen für eine Kühlung der Blasfolie sorgen.

Die JP S 58-107315 A und die JP S 58-94433 A zeigen einen Außenkühlring und einen darunter liegenden Absaugring. Damit wird bewirkt, dass der Kühlluftstrom teilweise entgegen der Transportrichtung des Folienschlauchs transportiert wird.

Die JP H 09 123273 A zeigt hingegen einen Außenkühlring und einen in Transportrichtung gesehen darüber angeordneten Absaugring.

Die JP 2010 247453 A zeigt einen Außenkühlring und sowohl einen darüber als auch einen darunter angeordneten Absaugring.

Die JP 2002 067146 A zeigt jeweils innerhalb und außerhalb der Folienblase sich gegenüber liegende Innen- und Außenkühlringe.

Die US 4 728 277 A und US 4 118 453 A die zeigen Außenkühlringe, die jeweils zwei unterschiedliche Luftdurchgänge aufweisen, wobei der Luftstrom des ersten Durchgangs nach oben, d. h. in die Transportrichtung der Folie abgelenkt wird und der Luftstrom des zweiten Durchgangs nach unten, also entgegen der Transportrichtung der Folie abgelenkt wird.

Die EP 1 736 297 A1 zeigt einen Außenkühlring, der einen in Transportrichtung der Folienblase gerichteten Kühlluftstrom erzeugt. Der Kühlring ist in eine Mehrzahl von Strömungskanälen, die in ihrem Querschnitt steuerbar sind, so dass der Kühlluftstrom, der durch einen Strömungskanal tritt, gesteuert werden kann.

Die EP 2 801 467 A1 zeigt eine Kalibriervorrichtung, deren Kalibriersegmente außerhalb des Folienschlauchs angeordnet sind und deren Luftaustritte einen Beitrag zur Kühlung der Folie liefern können.

Die US 5 804 221 A zeigt einen mehrstufigen Außenkühlring, bei dem der Venturi-Effekt dazu genutzt wird, um durch Öffnungen zwischen zwei konzentrisch angeordneten Ringen weitere Luft anzusaugen, die einen Betrag zur Kühlung der Folie liefert.

Es hat sich allerdings gezeigt, dass diese Maßnahme auch Grenzen hat, d.h. dass die Wirksamkeit dieser Maßnahme nicht beliebig steigerbar ist.

Die Aufgabe der vorliegenden Erfindung ist daher, eine Blasfolienanlage vorzuschlagen, mit der sich die Produktionsgeschwindigkeit einer Blasfolie weiter erhöhen lässt.

Erfindungsgemäß wird diese Aufgabe durch sämtliche Merkmale des Anspruchs 1 gelöst. In den abhängigen Ansprüchen sind mögliche Ausgestaltungen der Erfindung angegeben.

Gemäß der vorliegenden Erfindung ist vorgesehen, dass wenigstens eine Druckbereitstellungseinrichtung vorgesehen ist, mit welcher die Blasfolie an die Einrichtung zum Beaufschlagen der Blasfolie mit einem Fluidstrom mittels wenigstens eines Überdrucks und/oder eines Unterdrucks heranführbar. Überdruck bzw. Unterduck bedeuten hierbei ein Druck, der gegenüber dem um die Blasfolienanlage herum herrschenden Umgebungsdruck erhöht bzw. verringert ist.

Der Erfindung liegt die Erkenntnis zugrunde, dass eine erhöhte Beaufschlagung der Blasfolie mit wenigstens einem Fluidstrom die Kühlung deswegen nicht verbessert wird, weil die größere Menge an Fluid pro Zeiteinheit nicht vollständig an die Blasfolie herangeführt werden kann. Ein Grund ist unter anderem, dass die Blasfolie zurückweichen kann.

Erfindungsgemäß ist also vorgesehen, dass die Blasfolie durch eine zusätzliche Krafteinwirkung in Richtung auf die Einrichtung zum Beaufschlagen der Blasfolie mit zumindest einem Fluidstrom (im Folgenden kurz Fluidbeaufschlagungseinrichtung) nahe an dieser genannten Einrichtung gehalten wird, so dass das Fluid möglichst vollständig zum Abtransport der Wärme nutzbar ist. Im Ergebnis kann im Vergleich zu Anlagen des Standes der Technik die Kühlleistung und damit die Produktionsgeschwindigkeit der Blasfolie erhöht werden. Es gibt grundsätzlich zwei Möglichkeiten zur Erzeugung der genannten Krafteinwirkung. Zunächst kann die Blasfolie in Richtung auf die Fluidbeaufschlagungseinrichtung gezogen werden. Dies erfolgt in einer Ausführungsform der Erfindung durch einen Unterdruck auf der Seite der Fluidbeaufschlagungseinrichtung. Das bedeutet, dass der Fluidstrom und der Unterdruck auf derselben Seite (innerhalb der Blasfolie oder außerhalb der Blasfolie) der Blasfolie wirken. Der Fluidstrom bewirkt dabei einen Überdruck, jedoch steigt die daraus resultierende Krafteinwirkung mit geringer werdendem Abstand an. Der Unterdruck wirkt gleichzeitig, wobei der aus dem Fluidstrom resultierende Überdruck und der besagte Unterdruck ein Gleichgewicht hinsichtlich der auf die Blasfolie wirkenden Kräfte ausbilden.

Erfindungsgemäß ist weiterhin vorgesehen, dass die Druckbereitstellungseinrichtung zumindest einen Ring umfasst, welcher über den Umfang verteilt eine Mehrzahl an Modulen zum Steuern der Temperatur und/oder des Volumenstroms umfasst.

Alternativ oder zusätzlich kann auf der der Fluidbeaufschlagung abgewandten Seite der Wandung der Blasfolie eine einen Überdruck bereitstellende Einrichtung vorgesehen sein, mit welcher die Blasfolie gegen die Fluidbeaufschlagungseinrichtung drückbar ist. In diesem Fall kann in Transportrichtung gesehen die Fluidbeaufschlagungseinrichtung und die Druckbeaufschlagungseinrichtung direkt gegenüber liegend angeordnet sein. Auch in diesem Fall kann ein Druckgleichgewicht einstellbar sein, welches die Balsfolie nahe an die Fluidbeaufschlagungseinrichtung führt bzw. dort hält.

In einer ersten Ausführungsform können die Fluidbeaufschlagungseinrichtung und die Druckbereitstellungseinrichtung innerhalb der Blasfolie angeordnet sein. Vorteilhaft in diesem Fall ist, dass die Blasfolie zu Beginn der Produktion problemlos manuell aus der Austrittsdüse herausgezogen und durch die nachfolgenden Vorrichtungen hindurchgezogen werden kann.

In einer zweiten Ausführungsform können die Fluidbeaufschlagungseinrichtung und die Druckbereitstellungseinrichtung außerhalb der Blasfolie angeordnet sein. Vorteilhaft ist hier die bessere Zugänglichkeit dieser beiden Einrichtungen auch während der Produktion.

In einer weiteren Ausführungsform können die Fluidbeaufschlagungseinrichtung außerhalb der Blasfolie und die Druckbereitstellungseinrichtung innerhalb der Blasfolie angeordnet sein. Vorteilhaft ist hierbei, dass beide Einrichtungen einen Überdruck erzeugen, wobei Bauteile wie Gebläse eingespart werden können.

Vorteilhaft ist, wenn die Druckbereitstellungseinrichtung ein Bauteil an oder innerhalb der Fluidbeaufschlagungseinrichtung ist, welches eine Ausformung und/oder eine Anordnung aufweist, mit welcher ein Unterdruck aufgrund des vorbeiströmenden Fluidstroms erzeugbar ist. Hierbei wird der Bernoulli-Effekt ausgenutzt, bei dem ein Fluidstrom, dessen Geschwindigkeit - beispielsweise durch eine Verengung - erhöht wird, einen statischen Unterdruck erzeugt. Dieser statische Unterdruck dient im Rahmen der Erfindung dann dazu, die Blasfolie an die Fluidbeaufschlagungseinrichtung heranzuführen. Zusätzlich oder alternativ kann dieses Bauteil oder ein anderes Bauteil an eine Unterdruckquelle wie die Saugseite eines Gebläses oder eines Kompressors angeschlossen sein. Auf diese Weise wird eine weitere Steuerungsmöglichkeit für den Unterdruck dadurch geschaffen, dass die Größe des Unterdrucks durch die Gebläse- oder Kompressorleistung einstellbar ist.

Weitere Einzelheiten, Merkmale und Vorteile der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Blasfolien und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Schematische Ansicht einer erfindungsgemäßen Blasfolienanlage
- Fig. 2: eine erste Ausführungsform der Kühlbox
- Fig. 3: eine erste Ausführungsform der Kühlbox
- Fig. 4: eine erste Ausführungsform der Kühlbox
- Fig. 5: das Wirkprinzip eines Ringes
- Fig. 6: eine weitere Ausführungsform der Erfindung
- Fig. 7: einen anderen Aufbau
- Fig. 8: eine Erweiterung des Ausführungsbeispiels der Figur 7
- Fig. 9: eine weitere Variante eines Rings
- Fig. 10: ein Ausführungsbeispiel ohne Kasten
- Fig. 11: ein Ausführungsbeispiel, in dem der Fluidstrom der einzelnen Ringe unterschiedliche Größen aufweisen
- Fig. 12: eine vorteilhafte Weiterbildung der Erfindung
- Fig. 13: eine Ausführungsform ähnlich derjenigen gemäß Figur 10
- Fig. 14: eine weitere Anordnung der Ringe
- Fig. 15: ein weiteres Ausführungsbeispiel der Erfindung
- Fig. 16: ein weiteres Ausführungsbeispiel der Erfindung ähnlich der Fig. 15
- Fig. 17: eine Weiterbildung der Erfindung
- Fig. 18: ein weiteres Ausführungsbeispiel der Erfindung
- Fig. 19: ein weiteres Ausführungsbeispiel der Erfindung, wobei der Fluidstrom teilweise in Umfangsrichtung der Blasfolie gerichtet ist
- Fig. 20: einen drehbaren Ring
- Fig. 21: unterteilte Elemente eines Rings
- Fig. 22: ein weiteres Ausführungsbeispiel der Erfindung
- Fig. 23: ein weiteres Ausführungsbeispiel der Erfindung, welches dem Ausführungsbeispiel gemäß Fig. 15 ähnelt
- Fig. 24: ein weiteres Ausführungsbeispiel der Erfindung, welches dem Ausführungsbeispiel gemäß Fig. 9 ähnelt.
- Fig. 25: ein weiteres vorteilhaftes Ausführungsbeispiel der Erfindung
- Fig. 26: eine Weiterbildung der Erfindung

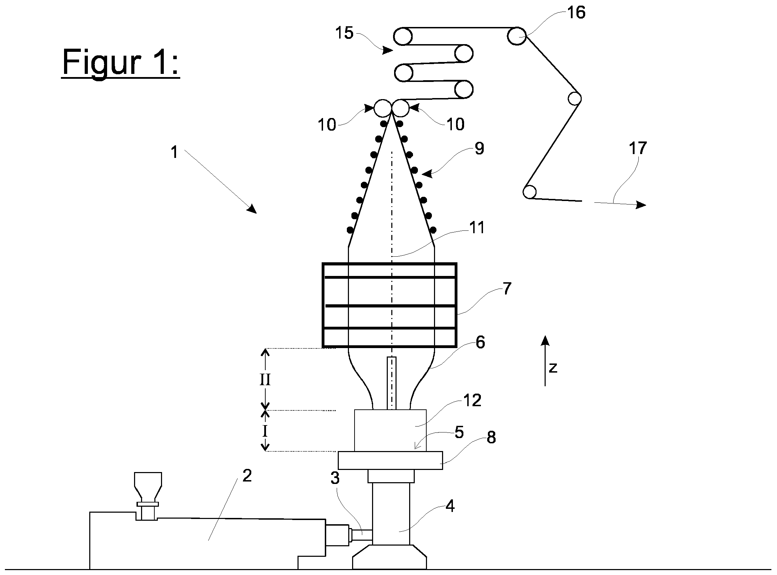

Die **Figur** 1 zeigt eine Blasfolienanlage 1 zur Herstellung einer Blasfolie, die zunächst wenigstens einen Extruder 2 umfasst, mit welcher beispielsweise in Granulatform vorliegender Kunststoff plastifizierbar ist. Über eine Leitung 3 wird die so erzeugte Kunststoffschmelze einem Verteilerwerkzeug 4 zugeführt, wo diese Schmelze in einen zylindrischen Schmelzestrom überführt wird, so dass dieser Schmelzestrom aus einer in dieser Figur nicht sichtbaren Austrittsdüse 5 in Abzugsrichtung z herausziehbar ist. Nun liegt eine noch nicht verfestigte Blasfolie 6 vor. Dieser gelangt nun im Bereich I in eine Kühlbox 12, in dem die Blasfolie in zylindrischer oder in leicht konischer Form geführt wird. Diese Kühlbox umfasst wenigstens eine Einrichtung zum Beaufschlagen der Blasfolie mit wenigstens einem Fluidstrom sowie wenigstens eine Druckbereitstellungseinrichtung, mit welcher die Blasfolie 6 an die Einrichtung Beaufschlagen der Blasfolie mit wenigstens einem Fluidstrom mit wenigstens einem Überdruck und/oder Unterdruck heranführbar ist. Details und vorteilhafte Ausführungsbeispiele dieser Kühlbox werden anhand der nachfolgenden Figuren dargestellt und erläutert.

Nach dem Verlassen der Kühlbox 12 wird im Bereich II die Blasfolie 6 von innen her durch einen leichten Überdruck aufgeblasen, so dass er innerhalb der optionalen Kalibriervorrichtung 7 einen größeren Durchmesser aufweist. Eine Verfestigung des Folienschlauches erfolgt durch wenigstens eine Temperiervorrichtung 8, die oft auch wegen seiner ringartigen, den Folienschlauch einfassenden Ausgestaltung als Kühlring bezeichnet wird. Dieser Kühlring kann - wie in der vorliegenden Figur gezeigt - unterhalb der Kühlbox 12 angeordnet sein. Alternativ kann ein solcher Kühlring auch oberhalb der Kühlbox 12 vorgesehen werden.

Nach dem Passieren der Kalibriervorrichtung gelangt der Folienschlauch 6 in den Wirkbereich einer Flachlegevorrichtung 9, in der der meist kreisrunde Folienschlauch in einen ellipsenförmigen Querschnitt mit einer zunehmenden Exzentrizität überführt wird, bis er schließlich im Einflussbereich der Abzugswalzen zwei aufeinander liegende Folienbahnen, die an ihren Seiten miteinander verbunden sind, bildet.

Die Flachlegeeinrichtung ist drehbar angeordnet, wobei die Drehachse im Wesentlichen mit der Schlauchachse 11, die in der Figur 1 durch eine strichpunktierte Linie angedeutet ist, fluchtet.

Die Figur 1 zeigt weiterhin eine Reversiereinrichtung 15, welche die Aufgabe hat, den flachgelegten Folienschlauch von der Flachlegevorrichtung zur ortfesten Walze 16 zu führen, ohne dass Beschädigungen auftreten. Der Pfeil 17 deutet an, dass dieser Folienschlauch nun zur Weiterverarbeitung geführt wird, welche hier nicht näher spezifiziert ist.

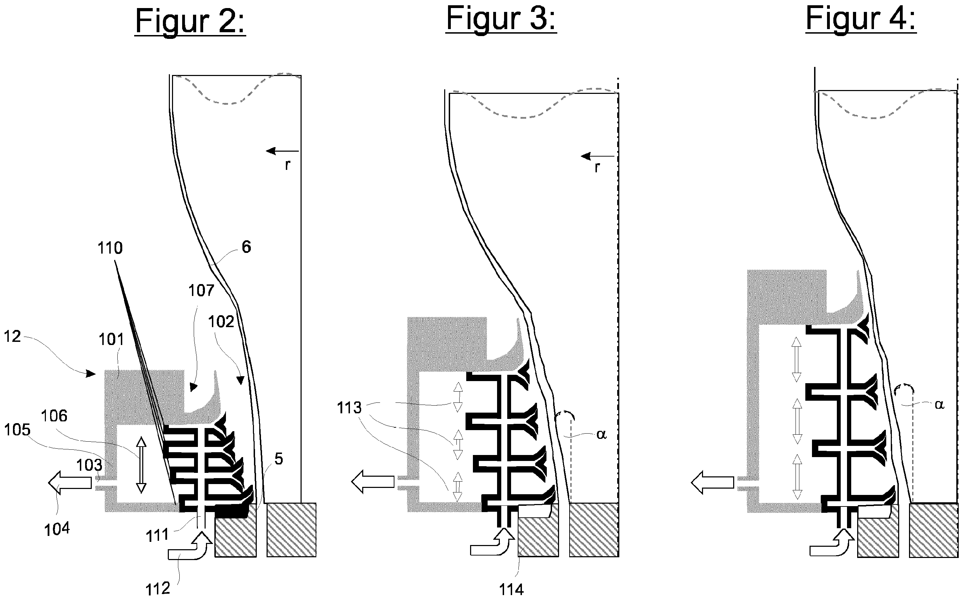

Die **Figuren 2, 3 und 4** zeigen nun eine erste Ausführungsform der Kühlbox 12. Diese Box umfasst zunächst einen Kasten 101, der beispielsweise kubisch, quaderförmig oder zylindrisch ausgestaltet sein kann. Der Blasfoliendurchtritt 102 ist hingegen der Form der Folie angepasst und daher vorzugsweise kreisrund. Der obere Bereich des Kastens kann einen bekannten Kühlring 107 umfassen. Ein solcher Kühlring 107 kann auch auf dem Kasten 101 aufgesetzt sein. Der Kasten 101 umfasst ferner zumindest eine Abluftöffnung 103, über die der Kasten mit einem Unterdruck beaufschlagbar ist. Dies ist durch den Pfeil 104 angedeutet. Dazu ist die Abluftöffnung 103 mit einer nicht dargestellten Unterdruckquelle verbindbar, was ein vorteilhafterweise Gebläse oder eine Pumpe sein kann. Durch den dadurch herrschenden Unterdruck wird die Blasfolie mit einer radial nach außen wirkenden Kraft beaufschlagt, um einerseits den durch die Ringe 110, die weiter unten beschrieben werden, auf die Blasfolie aufgetragenen Fluidstrom wieder abzuführen und andererseits die Folie weitere gegen die Ringe 110 zu ziehen. Der Kasten 101 kann Seitenwände 105 umfassen, die orthogonal zur Richtung z geteilt sind, so dass sich diese Teile gegeneinander verschieben lassen, wobei die Teile stets eine Überlappung aufweisen. Im Bereich der Überlappung kann eine Dichtung vorgesehen sein. Diese Maßnahme dient dazu, dass sich der Kasten in seiner Höhe in Richtung z verändern lässt, was durch den Pfeil 106 gezeigt ist. So kann vorzugsweise beim Anfahren der Blasfolienanlage der Kasten 101 zusammengefahren werden, so dass ein Bediener die Austrittsdüse 5 besser erreichen kann. Im laufenden Betrieb allerdings, kann der Kasten in seiner Höhe so angepasst werden, dass der Rand des Kastens, der den Blasendurchtritt 102 begrenzt, möglichst nahe an der Blasfolie 6 angeordnet ist. Dies ist in den Figuren 3 und 4 dargestellt.

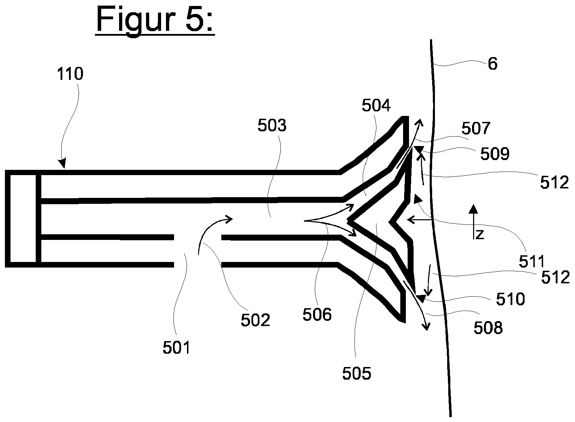

Innerhalb der Kühlbox 12 sind zudem Ringe 110 angeordnet, über welche die Blasfolie 6 mit einem Fluid beaufschlagbar ist. Dazu wird den Ringen über einen gemeinsamen Zuführkanal 111 das Fluid zugeführt, was durch den Pfeil 112 angedeutet ist. Dabei steht das Fluid unter einem Überdruck. Die Funktion eines solchen Ringes 110 wird weiter unten anhand der Figur 5 erläutert werden. Der Zuführkanal 111 kann zwischen den einzelnen Ringen als flexibler Schlauch, als Faltenbalg o.ä. ausgestaltet sein. Der Grund ist, dass der Abstand der Ringe 110 zueinander verstellbar ist, was mit den Pfeilen 113 in der Figur 3 angedeutet ist. Dabei kann der untere Ring im Bereich der Austrittsdüse 6 am Werkzeug 114 angeordnet und vorzugsweise dort befestigt sein, wogegen der obere Ring an einer Wandung des Kastens 101 angeordnet sein kann.

Die einzelnen Ringe können auf Führungen gelagert sein, wobei diese Führungen in Umfangsrichtung der Blasfolie verlaufen, jedoch in Richtung z geneigt sind, so dass eine Bewegung entlang der Führung gleichzeitig zu einer Bewegung in Richtung z führt. Damit ist es zur Höheneinstellung der Ringe lediglich notwendig, diese in Umfangsrichtung zu drehen, was sehr einfach und komfortabel ist. Alternativ ist jedoch eine Anordnung von Führungen in Richtung z möglich, so dass ein einfaches Verschieben/Verfahren in Richtung z ausreichend ist. In einer anderen Ausführungsform können beispielsweise die Ringe über federnde Elemente miteinander verbunden sein, so dass eine Höheneinstellung des Kastens ausreichend ist, um auch die Ringe in ihren Höhenpositionen anzupassen. Bei gleichen oder vergleichbaren Federkonstanten der federnden Elemente haben die Ringe untereinander einen gleichen Abstand.

In Richtung z gesehen kann vorgesehen sein, dass die Ringe einen größer werdenden Durchmesser aufweisen. Damit lässt sich die Blasfolie 6 konisch führen, d.h. in Richtung z weist die Blasfolie innerhalb der Kühlbox 12 einen größer werdenden Durchmesser auf. Durch die Höheneinstellung der Ringe 110 kann also auch der Winkel der Blasfolie relativ zur Richtung z (so genannter Öffnungswinkel α) eingestellt werden. Zwei unterschiedliche Öffnungswinkel α sind in den Figuren 3 und 4 dargestellt. So beträgt beispielsweise der Öffnungswinkel in der Figur 3 ca. 5° und in der Figur 4 ca. 3°.

Die **Figur 5** zeigt nun das Wirkprinzip eines Ringes 110. Der Fluidstrom, kenntlich gemacht durch den Pfeil 502 tritt durch die Öffnung 501 in den Innenraum 503 ein und wird dort in Richtung der Blasfolie 6 gelenkt. An dem der Blasfolie 6 zugewandten Ende des Innenraums umfasst dieser einen aufgeweiteten Bereich 504. In diesem aufgeweiteten Bereich 504 ist ein Strömungsteiler 505 vorgesehen, der den Fluidstrom in zwei - vorzugsweise gleich große - Teilströme aufteilt (siehe aufgespaltener Pfeil 506) und diese dabei umlenkt, so dass ein erster Teilstrom (Pfeil 507) zumindest teilweise in Richtung z und ein zweiter Teilstrom (Pfeil 508) zumindest teilweise gegen die Richtung z abgelenkt wird. Der Strömungsteiler 505 und der aufgeweitete Bereich 504 bilden dabei zwei Auslässe 509 und 510, wobei die jeweiligen Strömungsquerschnitte in Strömungsrichtung enger werden. Dadurch erhöhen sich die Strömungsgeschwindigkeiten der Teilströme, was zur Folge hat, dass an den Rändern des Bereichs 511 zwischen Strömungsteiler 505 und Blasfolie 6 ein Unterdruck entsteht, so dass die sich dort befindliche Luft herausgezogen wird, was durch die Pfeile 512 angedeutet ist. Letztendlich resultiert daraus eine auf die Blasfolie wirkende, radial nach außen gerichtete Kraft 513, mit welcher also die Blasfolie in Richtung auf den Ring gezogen wird. Der Ring 110 und der Strömungsteiler sind vorzugsweise rotationssymmetrisch, so dass auch die auf die Blasfolie 6 wirkende Kraft rotationssymmetrisch ist.

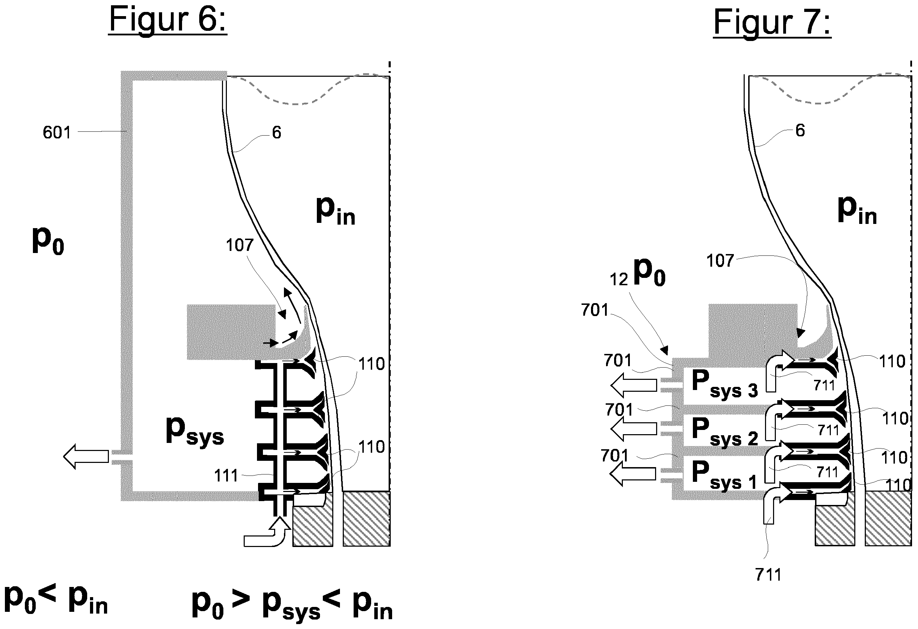

Die **Figur 6** zeigt nun eine weitere Ausführungsform der Erfindung, die der Ausführungsform der Figuren 2 bis 4 ähnelt. Der Kasten 601 hat nun vorzugsweise eine feste Höhe. Vorteilhaft ist es dabei, wenn diese Höhe auch den Bereich II (siehe Figur 1) mit umfasst. Die Ringe 110 sind nun innerhalb des Kastens 601 angeordnet, wobei keiner der Ringe 110 an dem Kasten 601 befestigt ist. Oberhalb der Ringe 110, aber innerhalb des Kastens 601 ist zudem der Kühlring angeordnet. Die Figur 6 verdeutlicht ferner die herrschenden Druckverhältnisse. Innerhalb der Blasfolie herrscht der Innendruck pᵢₙ, der größer ist als der Umgebungsdruck p₀. Der in dem Kasten herrschende Druck ist kleiner als die beiden Drücke pin und p₀. Um den Druck p_{sys} zu erreichen, ist wiederum vorzugsweise ein Gebläse oder ein Kompressor vorgesehen. Die Ringe werden wiederum über einen gemeinsamen Zuführkanal mit einem Fluidstrom versorgt.

Die **Figur 7** zeigt nun einen anderen Aufbau. In diesem Ausführungsbeispiel ist ist jedem Ring 110 ein eigener Kasten 701 zugeordnet, wobei jeder Kasten vorzugsweise auch einen eigenen Absaugkanal 703 aufweist. Dadurch ist der Druck p_{sys} in jedem Kasten 701 separat steuerbar. Zudem weist jeder Ring einen Zuführkanal 711 auf. Durch diese Anordnung ist der Fluidstrom eines jeden Rings 110 und der Druck p_{sys} separat steuer- oder sogar regelbar, so dass die Form der Blasfolie 6 und auch die Kühlleistung nach Bedarf anpassbar sind. Zudem kann eine so ausgestaltete Kühlbox 12 modular aufgebaut werden. Je nach Bedarf können weitere Kästen 701 einfach auf den obersten Kasten aufgelegt werden, oder es könnten Kästen 701 entfernt werden.

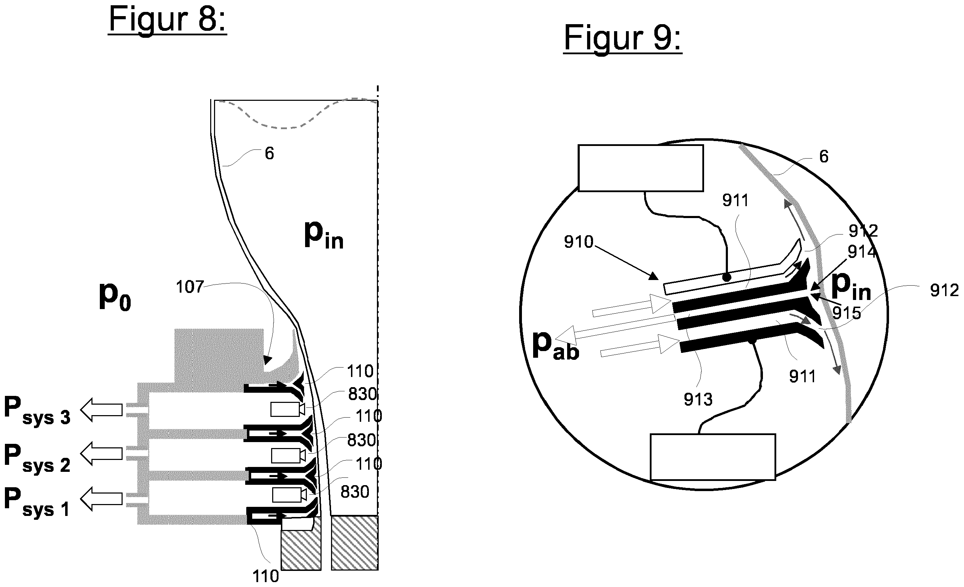

Die **Figur 8** zeigt nun eine Erweiterung des Ausführungsbeispiels der Figur 7. Zwischen den Ringen 110 sind nun Sensoren 830 vorgesehen, die in der Lage sind, relevante Messdaten zu der Blasfolie, wie etwa die Position, die Dicke oder die Temperatur zu bestimmen. Mit diesen Sensoren lässt sich nun eine Regelung aufbauen, wie sie schon im Zusammenhang mit der Figur 7 beschrieben wurde. Die Daten werden dazu einer nicht gezeigten Rechenvorrichtung zugeleitet, welche die gemessenen Daten mit Solldaten vergleicht und daraus Steuersignale für die Ringe bzw. den Fluidstrom und für den Solldruck innerhalb des Kastens 701 erzeugt. Eine solche Regelung ist für jeden Ring separat vorgesehen, jedoch werden vorzugsweise diese Steuersignale auch unter Berücksichtigung von den Daten und Signalen von zumindest einem weiteren Ring erzeugt.

Die **Figur 9** zeigt eine weitere Variante eines Rings 910, die einem Ring 110 ähnelt. Im Vergleich zu der Ausführungsform der Figur 5 umfasst der Ring 110 nicht einen Strömungsteile, sondern von vornherein zwei separate Kanäle 911 für beide Teilströme des Fluidstroms. Die Austrittsbereiche 912 sind jedoch genauso gestaltet wie im Beispiel der Figur 5, d. h. auch hier verengt sich der Querschnitt, so dass die im Zusammenhang mit der Figur 5 beschriebenen Effekte auftreten. Anstelle des Strömungsteilers 505 ist ein Saugstutzen 913 vorgesehen, dessen Saugende 914 ähnlich wie der Strömungsteiler 505 ausgestaltet ist. Der Saugstutzen wird bevorzugt dazu genutzt, um den Raum 915 zwischen der Blasfolie 6 und Saugende 914 weiter zu evakuieren. Durch diese Maßnahme kann die Blasfolie 6 mit einer zusätzlichen, nach außen gerichteten Kraft beaufschlagt werden. Ein solcher Ring kann alle, in den weiteren Figuren gezeigten Ringe 110 ersetzen. Der Saugstutzen kann dabei separat an einer Unterdruckquelle mit dem Druck p_{ab} angeschlossen sein oder auch einfach in dem Kasten enden, so dass der Druck p_{sys} auch über den Saugstutzen 913 in dem Raum 915 wirkt.

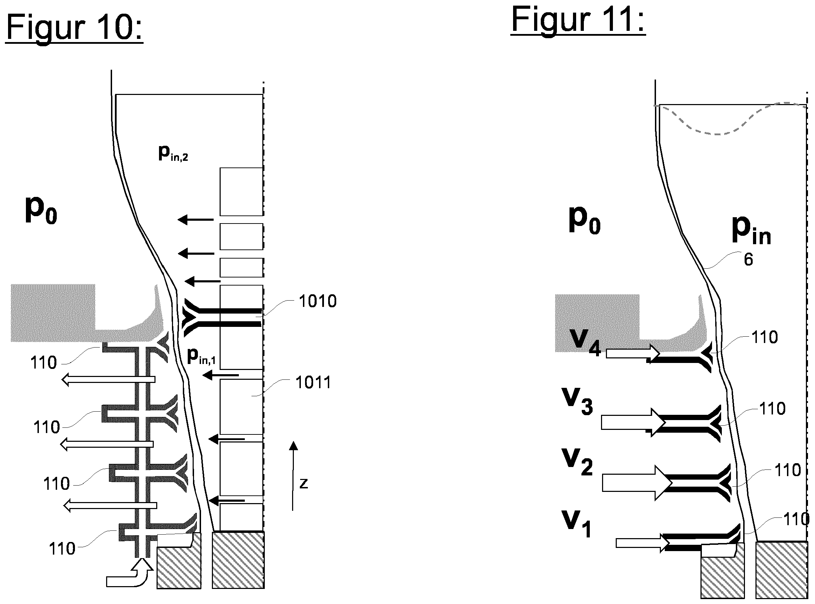

Das Ausführungsbeispiel der **Figur 10** kommt ohne einen Kasten aus. Zwar wird nun nicht mehr die Blasfolie durch einen zusätzlichen Unterdruck gegen die Ringe 110 gezogen, jedoch ist eine weitere Druckbeaufschlagungseinrichtung vorgesehen. Innerhalb der Blasfolie 6 ist nun ein weiterer Ring 1010 vorgesehen, der wie ein Ring 110 aufgebaut ist und gleiche Funktion umfasst. Dieser Ring 1010 wirkt wie eine Dichtung, so dass der Innenraum der Blasfolie 6 in zwei Druckzonen unterteilbar ist. Unterhalb des Rings 1010 herrscht der Druck p_{in,1}, oberhalb der Druck p_{in,2}. Der Druck p_{in,1} ist vorzugsweise dabei so einstellbar, dass er die gleiche Kraftwirkung entfaltet wie der Druck p_{sys}, der im Zusammenhang mit den vorher beschriebenen Ausführungsbeispielen dargestellt wurde. Die weitere Druckbeaufschlagungseinrichtung 1011 kann ähnlich aufgebaut sein wie bereits bekannte Innenkühleinrichtungen, mit welchen eine Blasfolie 6 von innen her kühlbar ist. Der Vorteil der Ausführungsform der Figur 10 ist, dass Kondensate, die als Gas aus der Blasfolie austreten und die sich auf den Ringen 110 niederschlagen, einfach von den Ringen und den weiteren Bauteilen entfernen, beispielsweise abwischen, lassen. Solche Kondensate sind vor allem Paraffine.

Die **Figur 11** offenbart nun ein Ausführungsbeispiel, in dem der Fluidstrom der einzelnen Ringe 110 unterschiedliche Größen aufweisen. Mit anderen Worten sind bevorzugt die Volumenströme des Fluids in jedem Ring unterschiedlich und vorzugsweise einstellbar. Dies wird durch die Angaben v₁, v₂, v₃ und v₄ symbolisiert. Damit ist dann die Kühlleistung über die Höhe der Blasfolie 6 variierbar.

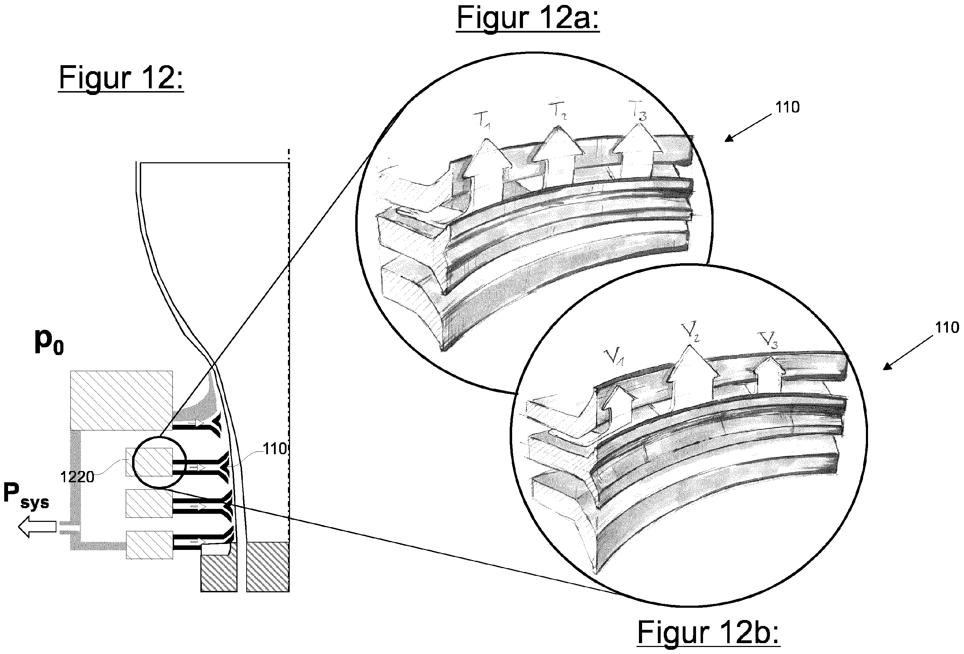

Anhand der **Figur 12** wird nun eine vorteilhafte Weiterbildung der vorliegenden Erfindung erläutert. Zumindest einem der Ringe ist über den Umfang verteilt eine Mehrzahl an Modulen 1220 zum Steuern der Temperatur und/oder des Volumenstrom des Fluidstroms vorgesehen. Anhand der Figuren 12a und 12b wird der Effekt verbildlicht. In der Figur 12a ist zu erkennen, dass in Umfangsrichtung der Blasfolie gesehen an unterschiedlichen Winkelpositionen der Fluidstrom unterschiedliche Temperaturen aufweisen kann. Dies wird durch die Angaben T₁, T₂, T₃ verdeutlicht. In der Figur 12b ist zu erkennen, dass in Umfangsrichtung der Blasfolie gesehen an unterschiedlichen Winkelpositionen der Fluidstrom unterschiedliche Volumenströme aufweisen kann. Dies wird durch die Angaben V₁, V₂, V₃ verdeutlicht. Im Zusammenhang mit einer Messvorrichtung zur Messung der Dicke der Blasfolie in Abhängigkeit von der Winkelposition und mit einer entsprechenden Ansteuerung der Module 1220 kann eine Regelung vorgesehen sein, mit welcher die gewünschte Dicke der Blasfolie an unterschiedlichen Winkelpositionen regelbar ist, also eine Profilregelung über den Umfang der Blasfolie 6.

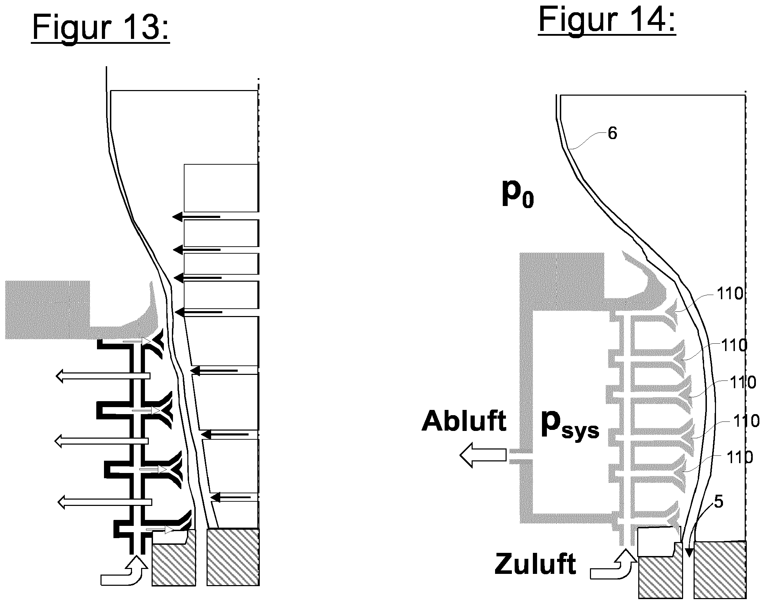

Die Ausführungsform der **Figur 13** ähnelt derjenigen der Figur 10, wobei jedoch der Ring 1010 weggelassen worden ist. Der Aufbau und die Vorteile der Erfindung entsprechen jedoch im Wesentlichen dem Ausführungsbeispiel der Figur 10.

Die **Figur 14** offenbart nun eine Anordnung der Ringe 110, wobei zumindest ein Teil der Ringe 110 einen Innendurchmesser aufweist, der kleiner ist als der Durchmesser der Austrittsdüse 5. Somit lässt sich ein größeres Aufblasverhältnis (Verhältnis von minimalem zu maximalem Durchmesser) der Blasfolie 6 erzielen.

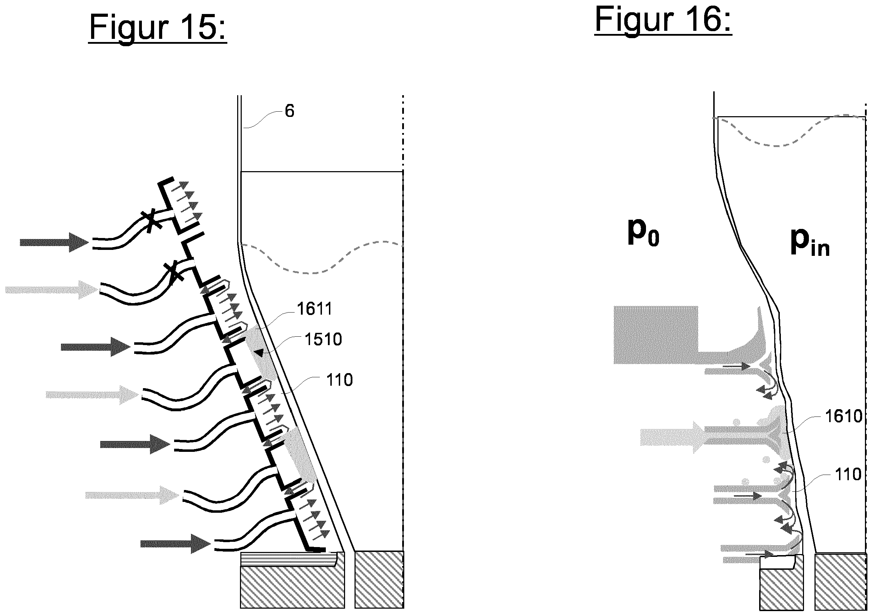

Die **Figur 15** zeigt ein weiteres Ausführungsbeispiel der Erfindung, bei dem Ringe 110 verwendet werden, um eine durch die Ringe 1510 auf die Blasfolie 6 aufgetragene Kühlflüssigkeit 1511 an diesem Ort zu halten. Die Ringe 110 dienen also als Dichtungen, die ein Abfließen der Kühlflüssigkeit verhindern. Auf diese Weise lässt sich bei bekannten Blasfolienanlagen eine Flüssigkeitskühlung vorsehen, mit welcher sich die Abkühlgeschwindigkeit der Blasfolie nochmals steigern lässt. Sind die Ringe 110 und 1510 in einem Kasten, beispielsweise Kasten 101, angeordnet, so lässt sich die Flüssigkeit über den Absaugkanal absaugen. Die **Figur 16** zeigt ein ähnliches Ausführungsbeispiel, bei dem ein Ring 1610 wie ein Ring 110 aufgebaut ist. Als Fluidstrom ist im Ring 1610 ein Flüssigkeitsstrom vorgesehen.

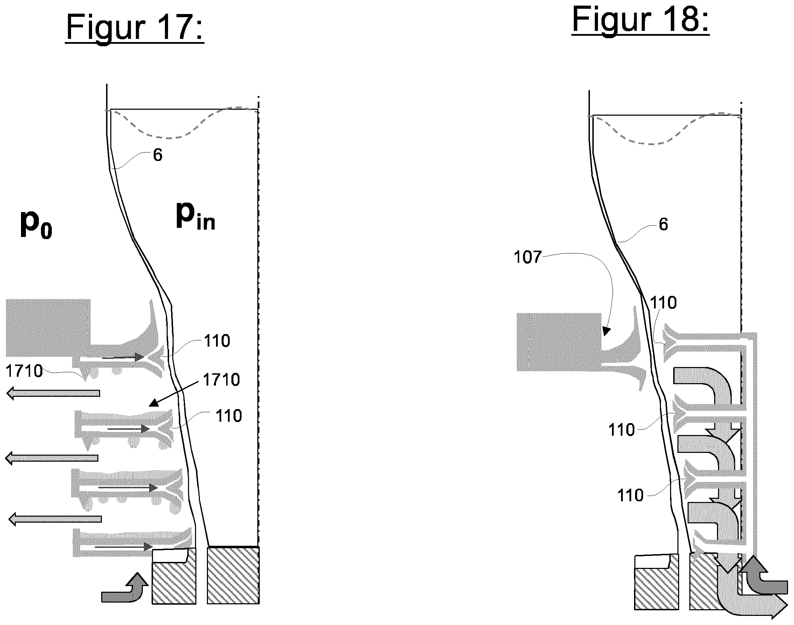

Die **Figur 17** zeigt eine Weiterbildung der Erfindung, welche sich nochmal dem Problem der sich niederschlagenden Kondensate zuwendet. Das sich an der Unterseite eines Kondensates sammelnde Kondensat kann bis zur Tropfnase 1711, welche an der Unterseite des Ring 110 angeordnet ist, fließen. Die Tropfnase sorgt für ein Abtropfen des Kondensats an einer vorgesehenen Stelle, so dass dieses nicht auf die Blasfolie 6 gelangt. Der darunter liegende Ring 110 ist nun vorteilhafterweise mit einer Auffangwanne 1710 ausgestattet, mit welchem das abtropfende Kondensat und auch das sich direkt niederschlagende Kondensat sammelbar ist. Über nicht gezeigte Abführleitungen kann das Kondensat in einem Abfallbehälter sammelbar sein.

Die **Figur 18** zeigt nun ein Ausführungsbeispiel, in dem eine Anordnung gemäß einem oder mehreren der zuvor gezeigten und beschriebenen Ausführungsbeispielen nicht außerhalb, sondern innerhalb der Blasfolie 6 angeordnet ist. Die Funktion und die Vorteile dieser Ausführungsform entsprechen jedoch den anderen Ausführungsbeispielen.

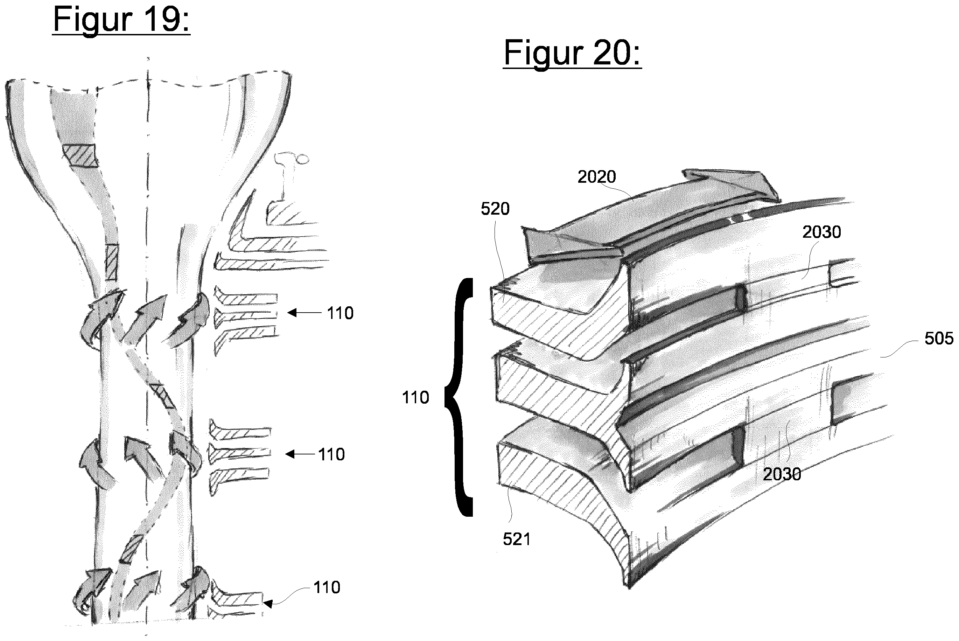

Die **Figur 19** beschreibt eine Ausführungsform der Ringe 110, bei der der Fluidstrom durch die Auslässe nicht nur in Transportrichtung z und/oder in radialer Richtung r der Blasfolie gerichtet ist, sondern zumindest teilweise auch in Umfangsrichtung der Blasfolie. Hier können innerhalb der Ringe Führungselemente vorgesehen sein, die den Fluidstrom in die gewünschte Richtung lenken. Damit kann erreicht werden, dass sich das Fluid besser über den Umfang der Blasfolie verteilt, was zu einer verbesserten Kühlwirkung führt. Zudem kann der Blasfolie eine Kreuzorientierung aufprägt werden. Diese Maßnahme kann zu einer besseren Stabilität der Blasfolie und des daraus später hergestellten Folienprodukts führen.

Der Ring 110 gemäß der **Figur 20** kann drehbar gelagert sein, wobei dieser dann relativ zur Austrittsdüse drehbar ist. Gleichwohl ist auch eine relative Drehbarkeit zweier Ringe 110 vorteilhaft Diese Drehbarkeit ist durch den Pfeil 2020 verdeutlicht. Dabei können auch die Wandungen 520, 521 und/oder der Strömungsteiler 505 relativ zueinander drehbar sein. Eine relative Drehung kann durch einen gerichteten Fluidstrom hervorgerufen werden, welcher eine Richtungskomponente in Umfangsrichtung hat. Vorteilhaft sind dabei Auslässe 509 und 510, die Wandungen mit Öffnungen umfassen, wobei mit den Öffnungen der Fluidstrom in die gewünschte Richtung lenkbar ist. Alternativ kann ein Antrieb vorgesehen sein, der für die Drehung der Ringe sorgt.

In einer weiteren Ausführungsform der Erfindung gemäß dem Ausführungsbeispiel der Figur 20 die Drehung der Ringe 110 oder der Bestandteile der Ringe reversierend erfolgen, d.h. dass die Ringe um einen - meist festen - Winkelbetrag nach rechts und nach links auslenkbar sind. Insbesondere im Zusammenhang mit den in der Figur 20 gezeigten Abdeckungen 2030 lässt sich der Blasfolie eine reversierende Beeinflussung aufprägen. An den Stellen, an denen die Abdeckung den Fluidstrom unterbricht, erfolgt eine geringere Abkühlung als an anderen Stellen. Diese Stelle bleibt somit wärmer und die Viskosität größer, so dass die Blasfolie hier "zerfließen" kann. Diese Stellen werden dünner. Vorteilhafterweise ist die Reversierung der Ringe 20 so auf die Reversiereinrichtung 15 abgestimmt, dass diese Dünnstellen immer an gleichen Positionen der flachgelegten Folie liegen, beispielsweise an deren Kanten. Dies ist besonders vorteilhaft, wenn die die Folie inline oder offline in so genannten MDO-Einrichtungen in Längsrichtung gedehnt wird. Denn bei diesem Prozess wird die Folie in Querrichtung schmaler und dickt sich an den Seitenrändern auf. Waren diese Seitenränder zuvor aber dünner, so ergibt sich nach dem Aufdicken bevorzugt eine Foliendicke, die der in der Mitte der Folie möglichst weitgehend entspricht. Auf diese Weise kann der Abfall, der durch Abtrennen der Seitenbereiche, die eine zu stark abweichende Foliendicke haben, reduziert werden.

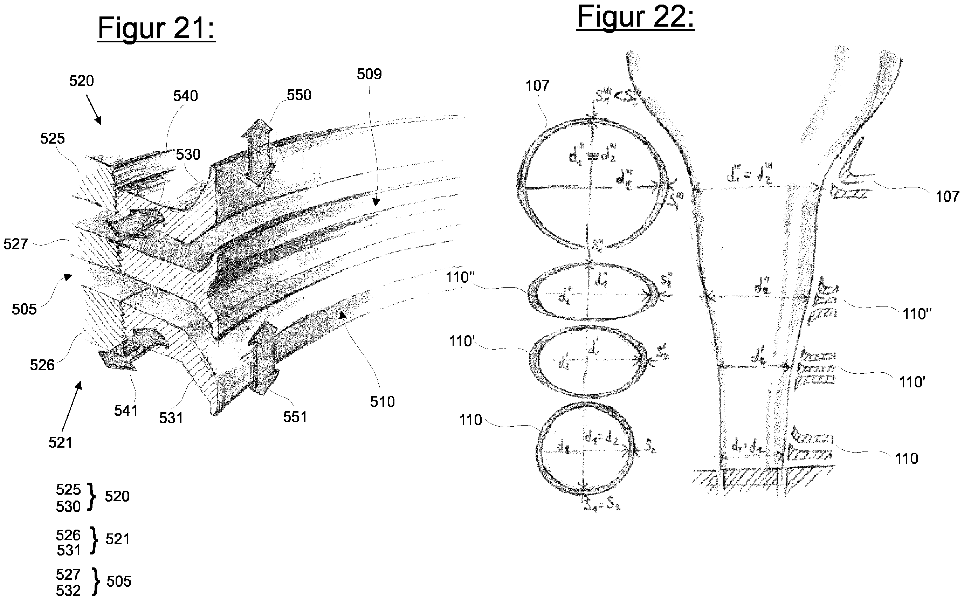

In der **Figur 21** ist eine Ausführungsform gezeigt, in der die Wandung 520, die Wandung 521 und/oder der Strömungsteile unterteilt sind. In diesem Fall ist jeweils ein feststehendes Teil 525, 526, 527 sowie ein bewegbares Teil 530, 531, 532 vorgesehen. Das jeweilige bewegbare Teil ist relativ zu dem zugehörigen festen Teil verschieblich, insbesondere höhenverschieblich in Richtung z. Dies kann auf verschiedene Arten erfolgen. Gezeigt ist jedoch lediglich eine Ausführungsform, in der das bewegbare sowie das zugehörige feststehende Teil jeweils ein Gewinde umfassen, so dass das bewegbare Teil in das feststehende Teil einschraubbar ist. Bei einer Relativbewegung der jeweiligen Teile gegeneinander, was durch die Pfeile 540 und 541 angedeutet ist, erfolgt automatisch eine Höhenverstellung, angedeutet durch die Pfeile 550 und 551. Mit der Verstellung der bewegbaren Teile relativ zu den zugehörigen feststehenden Teilen lässt sich insbesondere eine Höhenverstellung der beweglichen Teile zueinander realisieren. Somit ist es möglich, die Größen der Auslässe 509 und 510 zu variieren. Damit kann der Fluidstrom angepasst und letztlich die Kühlleistung eingestellt werden.

Die **Figur 22** zeigt eine Ausführungsform der Erfindung, bei der drei Ringe 110, 110' und 110" sowie der Kühlring 107 gezeigt sind. Im linken Teil der Figur sind die Ringe in der Aufsicht gezeigt. Wie zu erkennen ist, ist lediglich der Ring 110 und der Kühlring 107 kreisrund. Die beiden in Transportrichtung z der Blasfolie 6 folgenden Ringe 110' und 110" weisen eine Exzentrizität auf. Mit anderen Worten sind diese Ringe als Ellipsen ausgebildet. Allgemeiner ausgedrückt ist es vorteilhaft, wenn zumindest ein Ring 110 als Ellipse ausgebildet ist. Mit einer solchen Ausgestaltung sind die Folieneigenschaften über den Umfang veränderbar, insbesondere hinsichtlich der Foliendicken. Es lassen sich somit für bestimmte Anwendungen besser geeignete Folien herstellen, beispielsweise für Streckhauben, Schrumpfhauben oder FFS-Säcke. Hier kann es vorteilhaft sein, wenn die später stärker beanspruchten Kanten schon bei der Herstellung mit einer größeren Wanddicken als die übrigen Bereich versehen werden. Im gezeigten Ausführungsbeispiel sind bei den Ellipsen die großen Halbachsen parallel zueinander angeordnet. Es kann - je nach Anwendung der herzustellenden Folie - ebenfalls vorteilhaft sein, wenn die große Halbachse eines Rings parallel zu der kleinen Halbachse eines anderen Rings verläuft. Auch andere Winkel zwischen den großen Halbachsen können vorteilhaft sein.

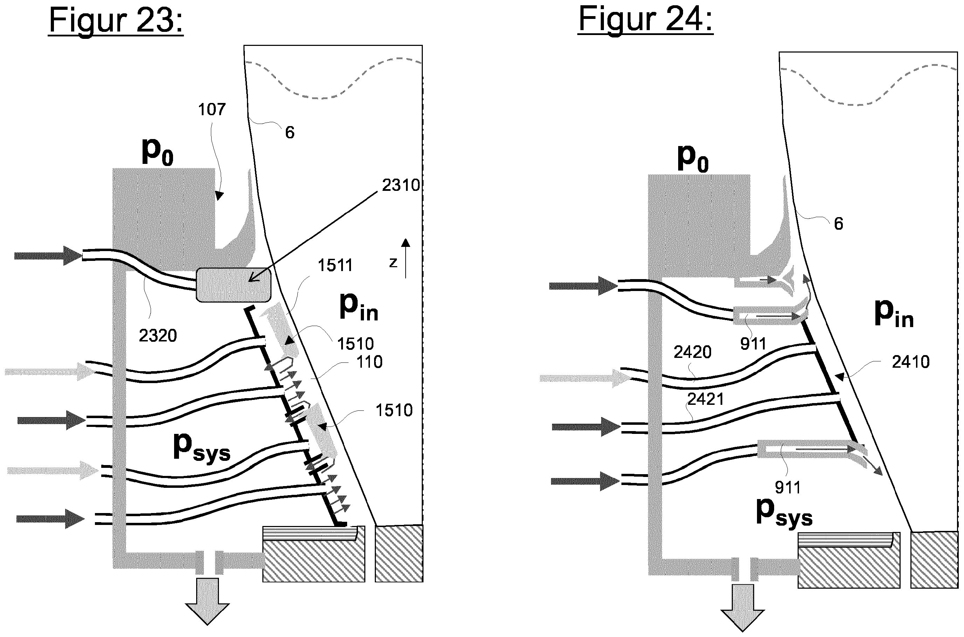

In der **Figur 23** ist nun ein weiteres Ausführungsbeispiel der Erfindung gezeigt, das dem Ausführungsbeispiel der Figur 15 ähnelt. In diesem Ausführungsbeispiel ist die Kühlbox 12 explizit gezeigt. Die Ringe 1510 entsprechen denen des Ausführungsbeispiels gemäß Figur 15. In Transportrichtung z der Blasfolie 6 schließt sich den Ringen 110 bzw. 1510 eine Sperrluftdichtung 2310 an, welche vorzugsweise ebenfalls ringförmig ausgestaltet ist. Bevorzugt ist es, diese Sperrluftdichtung unterhalb des Kühlrings 107 anzuordnen. In einer vorteilhaften Weiterbildung ist die Sperrluftdichtung als Körper ausgebildet, bei dem zumindest die der Blasfolie zugewandte Fläche zumindest teilweise poröses, insbesondere mikroporöses Material umfasst. Das poröse Material umfasst dabei Öffnungen mit einer Größe von maximal 500 Mikrometern. Ein Material mit solchen Öffnungen ist in der Regel gesintertes Material, insbesondere Sinterkeramik, Sintermetall oder Sinterkunststoff. Der Sperrluftdichtung ist ein Gas, insbesondere Luft, über eine Leitung 2320 zuführbar, welches gegenüber dem Umgebungsdruck einen erhöhten Druck aufweist. Dieser Druck ist wiederum mit einem Gebläse oder einem Kompressor erzeugbar.

Die Ausführungsform gemäß **Figur 24** zeigt eine Ausführungsform der Erfindung, die der Ausführungsform gemäß Figur 9 ähnelt. An die Stelle des Saugstutzens tritt hier allerdings ein Flüssigkeitsreservoir 2410, welchem eine Flüssigkeit und fakultativ auch ein Gas zugeführt werden kann, um eine bessere Kühlleistung zu erzielen. Im Vergleich zur Figur 9 umfasst das Flüssigkeitsreservoir eine Zuleitung 2420 für die Flüssigkeit und eine fakultative Zuleitung 2421 für das Gas. Als Flüssigkeit ist bevorzugt Wasser verwendbar, als Gas ist bevorzugt Luft verwendbar. Die Zuführkanäle 911 sind im Vergleich mit dem Ausführungsbeispiel nach Figur 9 vorzugsweise unverändert und sind oberhalb bzw. unterhalb des Flüssigkeitsreservoirs 2410 vorgesehen.

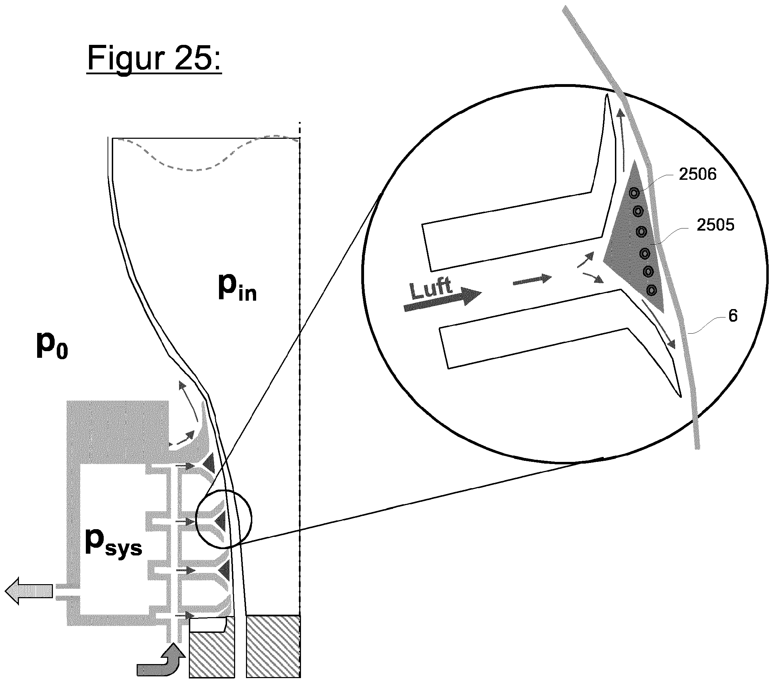

Die **Figur 25** zeigt ein weiteres vorteilhaftes Ausführungsbeispiel der Erfindung, mit welchem sich die Kühlleistung nochmals erhöhen lässt. In diesem Ausführungsbeispiel ist der Strömungsteiler 2505 (siehe Vergrößerung des in der Figur 25 eingekreisten Bereichs) mit Leitungen 2506 durchsetzt, durch welche ein temperiertes Fluid durchleitbar ist, mit welchem der Strömungsteiler 2505 temperierbar ist. Als Fluid ist beispielsweise Wasser, Thermoöl oder eine andere Flüssigkeit mit hoher Wärmekapazität verwendbar. Besonders vorteilhaft ist es, wenn die Blasfolie in Kontakt mit dem Strömungsteiler steht, um einen größtmöglichen Wärmeübergang zu erreichen.

Der Strömungsteiler 2505 kann über den Umfang der Blasfolie 6 in Segmente aufteilt sein, wobei dann bevorzugt jedes Segment unabhängig von anderen Segmenten einzeln temperierbar ist. Auf diese Weise kann wiederum die Blasfolie über den Umfang unterschiedlich beeinflusst werden, insbesondere hinsichtlich der Wandstärke der Blasfolie.

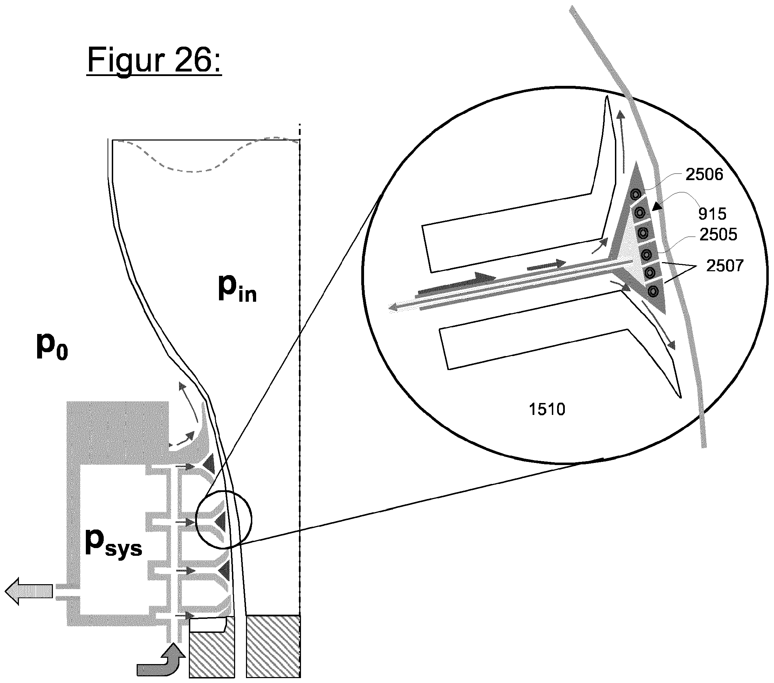

Um einen möglichst große Kontaktfläche zwischen Blasfolie 6 und Strömungsteiler 2505 zu erhalten, ist es besonders vorteilhaft, den Strömungsteiler gemäß der Figur 9 auszugestalten, d.h. insbesondere diesen zusätzlich als Saugstutzen 913 auszugestalten. Dies ist in der **Figur 26** dargestellt. Quer zu und zwischen den Leitungen 2506 können dann Saugkanäle 2507 vorgesehen sein, um den Raum zwischen Strömungsteiler 2505 und Blasfolie 6 auf einfache Weise mit einem Unterdruck beaufschlagen zu können.

| **Bezugszeichenliste** | |
|---|---|
| 1 | Blasfolienanlage |
| 2 | Extruder |
| 3 | Leitung |
| 4 | Verteilerwerkzeug |
| 5 | Austrittsdüse |
| 6 | Blasfolie |
| 7 | Kalibriervorrichtung |
| 8 | Tem periervorrichtung |
| 9 | Flachlegevorrichtung |
| 10 | |
| 11 | Schlauchachse |
| 12 | Kühlbox |
| 13 | |
| 14 | |
| 15 | Reversiereinrichtung |
| 16 | Walze |
| 101 | Kasten |
| 102 | Blasfoliendurchtritt |
| 103 | Abluftöffnung |
| 104 | Pfeil |
| 105 | |
| 106 | Pfeil |
| 107 | Kühlring |
| 108 | |
| 109 | |
| 110 | Ringe |
| 111 | Zuführkanal |
| 112 | Pfeil |
| 113 | Pfeile |
| 114 | Werkzeug |
| 501 | Öffnung |
| 502 | Pfeil |
| 503 | Innenraum |
| 504 | Aufgeweiteter Bereich |
| 505 | Strömungsteiler |
| 506 | Aufgespaltener Pfeil |
| 507 | Pfeil |
| 508 | Pfeil |
| 509 | Auslass |
| 510 | Auslass |
| 511 | Bereich zwischen Strömungsteiler 505 und Blasfolie 6 |
| 512 | Pfeil |
| 513 | Nach außen gerichtete Kraft |
| 520 | Wandung |
| 521 | Wandung |
| 525 | Feststehendes Teil |
| 526 | Feststehendes Teil |
| 527 | Feststehendes Teil |
| 530 | Bewegliches Teil |
| 531 | Bewegliches Teil |
| 532 | Bewegliches Teil |
| 540 | Pfeil |
| 541 | Pfeil |
| 550 | Pfeil |
| 551 | Pfeil |
| | |
| 601 | Kasten |
| 701 | Kasten |
| 703 | Absaugkanal |
| 830 | Sensoren |
| 910 | Variante eines Rings |
| 911 | Zwei separate Kanäle |
| 912 | Austrittsbereich |
| 913 | Saugstutzen |
| 914 | Saugende |
| 915 | Raum |
| 1010 | Ring |
| 1011 | Druckaufschlagungseinrichtung |
| 1220 | Module |
| 1510 | Ringe |
| 1610 | Ring |
| 1710 | Auffangwanne |
| 1711 | Tropfnase |
| 2020 | Pfeil |
| 2030 | Abdeckung |
| 2310 | Sperrluftdichtung |
| 2320 | Leitung |
| 2410 | Flüssigkeitsreservoir |
| 2420 | Zuleitung |
| 2421 | Fakultative Zuleitung |
| 2505 | Strömungsleiter |
| 2506 | Leitung |
| 2507 | Saugkanäle |

## Patentansprüche

1. Blasfolienanlage (1) zur Herstellung einer Blasfolie (6) mit
• zumindest einem Extruder (2) zum Erzeugen zumindest eines Schmelzestranges
• zumindest einem Verteilwerkzeug (4) zum Umwandeln des zumindest eines Schmelzestranges auf eine umlaufende Schmelzeschicht
• eine Austrittsdüse (5) zum Ausgeben der zumindest einen Schmelzeschicht, wobei die zumindest eine Schmelzeschicht die Blasfolie (6) bildet.
• wenigstens eine Einrichtung zum Beaufschlagen der Blasfolie (6) mit wenigstens einem Fluidstrom (502), insbesondere einem Luftstrom, zum Kühlen der Blasfolie (6),
wobei wenigstens eine Druckbereitstellungseinrichtung (110) vorgesehen ist, mit welcher die Blasfolie (6) an die Einrichtung zum Beaufschlagen der Blasfolie (6) mit einem Fluidstrom (502) mittels wenigstens eines Überdrucks und/oder eines Unterdrucks heranführbar ist, wobei die Druckbereitstellungseinrichtung (110) ein Bauteil an oder innerhalb der Fluidbeaufschlagungseinrichtung ist, wobei die Druckbereitstellungseinrichtung (110) eine Ausformung und/oder eine Anordnung ausweist, mit welcher ein Unterdruck aufgrund des vorbeiströmenden Fluidstroms (502) erzeugbar ist, wobei mit dem Fluidstrom (502), dessen Geschwindigkeit erhöht ist, ein statischer Unterdruck erzeugbar ist, wobei die Blasfolie an die Fluidbeaufschlagungseinrichtung heranführbar ist,
**dadurch gekennzeichnet, dass**
die Druckbereitstellungseinrichtung (110) zumindest einen Ring (110) umfasst, welcher über den Umfang verteilt eine Mehrzahl an Modulen (1220) zum Steuern der Temperatur und/oder des Volumenstroms umfasst,
wobei im Innenraum des Ringes der Fluidstrom in Richtung der Blasfolie lenkbar ist, wobei an dem der Blasfolie (6) zugewandten Ende des Innenraums einen aufgeweiteten Bereich umfasst, in welchem ein Strömungsteiler (505) vorgesehen ist, mit welchem der Fluidstrom in zwei Teilströme aufteilbar und umlenkbar ist, so dass ein erster Teilstrom (507) zumindest teilweise in Richtung z und ein zweiter Teilstrom (508) zumindest teilweise gegen die Richtung z ablenkbar ist.

2. Blasfolienanlage nach Anspruch 1,
**dadurch gekennzeichnet, dass**
die Druckbereitstellungseinrichtung (110) gegenüber der Umgebung mit einer Dichteinrichtung, welche an der Oberfläche der Blasfolie (6) angeordnet ist, abdichtbar ist.

## Claims

1. A blown film system (1) for producing a blown film (6) having
• at least one extruder (2) for producing at least one melt strand
• at least one distribution tool (4) for converting the at least one melt strand to a circumferential melt layer
• an outlet nozzle (5) for dispensing the at least one melt layer, wherein the at least one melt layer forms the blown film (6)
• at least one device for applying at least one fluid flow (502), in particular an air flow, to the blown film (6) for cooling the blown film (6),
wherein at least one pressure supply device (110) is provided, with which the blown film (6) can be brought to the device for applying a fluid flow (502) to the blown film (6) by means of at least a positive pressure and/or a negative pressure, wherein the pressure supply device (110) is a component on or within the fluid application device, wherein the pressure supply device (110) has a shape and/or an arrangement, with which an negative pressure can be generated due to the fluid flow (502) flowing past, wherein a static negative pressure can be generated with the fluid flow (502) the speed of which is increased, wherein the blown film can be brought to the fluid application device,
**characterized in that**
the pressure supply device (110) comprises at least one ring (110),
which comprises a plurality of modules (1220) distributed over the circumference for controlling the temperature and/or the volume flow,
wherein in the interior of the ring the fluid flow can be guided in the direction of the blown film, wherein at the end of the interior facing the blown film (6) a widened area is provided, in which a flow divider (505) is provided, with which the fluid flow can be divided into two partial flows and can be deflected, so that a first partial flow (507) can be deflected at least partially in the direction z and a second partial flow (508) can be deflected at least partially against the direction z.

2. The blown film system according to claim 1,
**characterized in that**
the pressure supply device (110) can be sealed off from the environment with a sealing device, which is arranged on the surface of the blown film (6).

## Revendications

1. Installation de soufflage de feuilles (1) pour la fabrication d'une feuille soufflée (6) avec
• au moins une extrudeuse (2) pour la production d'au moins une barre de matière fondue
• au moins un outil de répartition (4) pour la transformation de l'au moins une barre de matière fondue en une couche de matière fondue périphérique
• une buse de sortie (5) pour la sortie de l'au moins une couche de matière fondue, dans lequel l'au moins une couche de matière fondue forme la feuille soufflée (6)
• au moins un dispositif pour l'alimentation de la feuille soufflée (6) avec au moins un flux de fluide (502), plus particulièrement un flux d'air, pour le refroidissement de la feuille soufflée (6),
dans lequel au moins un dispositif d'application de pression (110) est prévu, avec lequel la feuille soufflée (6) peut être rapprochée du dispositif pour l'alimentation de la feuille soufflée (6) avec un flux de fluide (502) au moyen d'au moins une surpression et/ou d'une dépression, dans lequel le dispositif d'application de pression (110) est un composant sur ou à l'intérieur du dispositif d'alimentation en fluide, dans lequel le dispositif d'application de pression (110) présente une déformation et/ou une disposition avec laquelle une dépression peut être générée sur la base du flux de fluide (502) qui passe, dans lequel, avec le flux de fluide (502), dont la vitesse est augmentée, une dépression statique peut être générée, dans lequel la feuille soufflée peut être rapprochée du dispositif d'alimentation en fluide,
**caractérisé en ce que**
le dispositif d'application de pression (110) comprend au moins une bague (110) qui comprend, répartis sur la circonférence, une pluralité de modules (1220) pour le contrôle de la température et/ou du débit volumique,
dans lequel, à l'intérieur de la bague, le flux de fluide peut être dévié en direction de la feuille soufflée, dans lequel, au niveau de l'extrémité, orientée vers la feuille soufflée (6), de l'intérieur, elle comprend une partie élargie dans laquelle est disposé un diviseur d'écoulement (505), avec lequel le flux de fluide peut être divisé et dévié en deux flux partiels, de sorte qu'un premier flux partiel (507) peut être dévié au moins partiellement dans la direction z et un deuxième flux de fluide (508) peut être dévié au moins partiellement à l'encontre de la direction z.

2. Installation de soufflage de feuilles selon la revendication 1,
**caractérisé en ce que**
le dispositif d'application de pression (110) peut être étanchéifié par rapport à l'environnement avec un dispositif d'étanchéité qui est disposé sur la surface de la feuilel soufflée (6).
